# EUROPÄISCHE PATENTSCHRIFT

(11) **EP 2 718 763 B1**
(45) Veröffentlichungstag und Bekanntmachung des Hinweises auf die Patenterteilung: **27.02.2019**
(21) Anmeldenummer: 12726421.6
(22) Anmeldetag: 05.06.2012
(51) Int. Cl.: G02B 7/36, G02B 21/24, H04N 5/232

(54) **AUTOFOKUSVERFAHREN FÜR MIKROSKOP UND MIKROSKOP MIT AUTOFOKUSEINRICHTUNG**
AUTOFOCUS METHOD FOR MICROSCOPE AND MICROSCOPE COMPRISING AUTOFOCUS DEVICE
PROCÉDÉ DE MISE AU POINT AUTOMATIQUE POUR UN MICROSCOPE ET MICROSCOPE ÉQUIPÉ D'UN SYSTÈME DE MISE AU POINT AUTOMATIQUE

(30) Priorität: 08.06.2011 DE 102011077236
(43) Veröffentlichungstag der Anmeldung: 16.04.2014
(73) Patentinhaber: Carl Zeiss Microscopy GmbH, 07745 Jena (DE)
(72) Erfinder: WESTPHAL, Peter, 07743 Jena (DE); MITZKUS, Reiner, 37085 Göttingen (DE)
(74) Vertreter: Patentanwälte Geyer, Fehners & Partner mbB
(86) Internationale Anmeldenummer: PCT/EP2012/060605
(87) Internationale Veröffentlichungsnummer: WO 2012/168244

(56) Entgegenhaltungen:
- EP-A2- 1 248 132
- WO-A1-98/45745
- WO-A1-2004/038483
- WO-A1-2007/144197
- DE-A1-102008 005 355
- US-A- 4 725 722

## Beschreibung

Die Erfindung bezieht sich auf ein Mikroskop mit einem Objektiv, das eine in einem Probenraum liegende Fokusebene aufweist, und einer Autofokuseinrichtung, die aufweist einen Lichtmodulator, der zur Erzeugung eines leuchtenden, längs einer Richtung periodisch intensitätsmodulierten Modulationsobjektes ausgebildet ist, eine Autofokus-Beleuchtungsoptik, die das Modulationsobjekt abbildet, so dass im Probenraum ein Bild des Modulationsobjektes entsteht, eine Autofokus-Kamera, eine Autofokus-Abbildungsoptik, die das im Probenraum liegende Bild des Modulationsobjektes auf die Autofokus-Kamera abbildet, eine Steuereinrichtung, die Signale der Autofokus-Kamera empfängt und dazu ausgebildet ist, eine Intensitätsverteilung des Bildes des Modulationsobjektes zu ermitteln und daraus ein Fokus-Steuersignal zu erzeugen.

Die Erfindung bezieht sich weiter auf ein Autofokusverfahren für ein Mikroskop mit einem Objektiv, das eine Probe abbildet, wobei ein leuchtendes, längs einer Richtung periodisch intensitätsmoduliertes Modulationsobjekt so auf die Probe abgebildet wird, dass dort ein Bild des Modulationsobjektes entsteht, eine Intensitätsverteilung des Bildes des Modulationsobjektes ermittelt und daraus ein Fokus-Steuersignal erzeugt wird.

Ein gattungsgemäßes Mikroskop sowie ein gattungsgemäßes Autofokusverfahren sind aus der WO 2007/144197 A1 bekannt. Sie schildert eine Autofokusvorrichtung, die ein längs einer Richtung periodisch intensitätsmoduliertes Modulationsobjekt in die Probe abbildet und aus dem Bild des Modulationsobjektes ein Autofokussignal erzeugt. Ähnliche Mikroskope finden sich in der DE 102006027836 A1 oder der DE 102007055530 A1.

Dieser Ansatz erreicht sehr gute Autofokuseigenschaften, hat aber mitunter dann Probleme, wenn die Reflektionseigenschaften der Probe lokal variieren, da dann das Bild des Modulationsobjektes von den Reflektionsvariationen der Probe gestört sein kann. Im schlimmsten Fall kann das Bild des Modulationsobjektes so stark vom Objektbild verändert werden, dass kein Autofokussignal mehr erzeugt werden kann.

Die DE 19537376 A1 verwendet zwei Muster aus um 180° phasenverschobenen, periodischen Gittern in verschiedenen Fokusebenen. Die Muster dienen der Richtungsbestimmung für die Autofokussierung.

In der DE 102008005355 A1 wird beschrieben, wie sich ein Reflektivitätssprung auf das AF-Kontrastsignal auswirkt. Um dadurch negative Einflüssen zu vermeiden, wird eine Defokussierung der projizierten Gitterstrukturen vorgeschlagen.

In US 4725722 werden unterschiedlich defokussierte Gitterabbildungen voneinander subtrahiert.

Die WO 2004/038483 A1, WO 98/45745 und EP 12481342 A1 offenbaren Mikroskope mit Autofokuseinrichtung.

Der Erfindung liegt die Aufgabe zugrunde, ein Mikroskop bzw. ein Autofokusverfahren der eingangs genannten Art so weiterzubilden, dass auch bei Proben, die eine Reflektionsvariation zeigen, eine zuverlässige Autofokusfunktion verwirklicht ist.

Diese Aufgabe wird mit einem gattungsgemäßen Mikroskop gemäß Anspruch 1 gelöst. Es ist vorgesehen, dass der Lichtmodulator zusätzlich ein leuchtendes Vergleichsobjekt erzeugt, das sich längs der Richtung des Modulationsobjektes erstreckt, die Autofokus-Beleuchtungsoptik auch das Vergleichsobjekt abbildet, so dass im Probenraum ein Bild des Vergleichsobjektes entsteht, die Autofokus-Abbildungsoptik auch das im Probenraum liegende Bild des Vergleichsobjektes auf die Autofokus-Kamera abbildet, und die Steuereinrichtung dazu ausgebildet ist, aus den Signalen der Autofokus-Kamera eine Intensitätsverteilung des Bildes des Vergleichsobjektes längs der Richtung zu ermitteln und damit die Intensitätsverteilung des Bildes des Modulationsobjektes hinsichtlich Reflektivitätsvariationen im Probenraum zu korrigieren.

Die Aufgabe wird weiter gelöst mit einem Autofokusverfahren gemäß Anspruch 6. Dabei wird zusätzlich ein leuchtendes Vergleichsobjekt, das sich längs der Richtung des Modulationsobjektes erstreckt, auf die Probe abgebildet, so dass dort ein Bild des Vergleichsobjektes entsteht, eine Intensitätsverteilung des Bildes des Vergleichsobjektes längs der Richtung ermittelt und damit die Intensitätsverteilung des Bildes des Modulationsobjektes hinsichtlich Reflektivitätsvariationen der Probe korrigiert wird.

Erfindungsgemäß wird also ein Vergleichsobjekt vorgesehen, das ebenfalls in die Probe abgebildet wird. Die Intensitätsverteilung des Bildes wird längs der Richtung des Referenzobjektes ermittelt. Aus der Intensitätsverteilung des Bildes des Vergleichsobjektes kann unproblematisch die Intensitätsverteilung des Bildes des Modulationsobjektes hinsichtlich Reflektivitätsvariationen im Probenraum korrigiert werden.

Das Vergleichsobjekt erlaubt also, Reflektionsvariationen im Probenraum zu ermitteln, die die Abbildung des Modulationsobjektes stören könnten. Dazu ist zweckmäßigerweise das Vergleichsobjekt längs insbesondere neben dem Modulationsobjekt angeordnet und anders als das Modulationsobjekt im Ergebnis nicht periodisch intensitätsmoduliert, damit die Intensitätsverteilung des Bildes des Vergleichsobjektes längs der Richtung des Bildes des Modulationsobjektes die Reflektionsvariation im Probenraum wiederspiegelt.

Dies kann besonders einfach dadurch erreicht werden, dass das Vergleichsobjekt die Form einer Linie oder eines rechteckigen Feldes hat. Eine im Ergebnis ausbleibende, periodische Intensitätsmodulation kann auch erreicht werden, indem das Vergleichsobjekt mit einer Strukturfeinheit ausgestaltet ist, die vom Mikroskop nicht aufgelöst werden kann.

Idealerweise erstreckt sich das Vergleichsobjekt längs der Richtung des Modulationsobjektes über genau die gleiche Länge, die das Modulationsobjekt hat. Dann gilt gleiches auch für die entsprechenden Bilder dieser Objekte. Dann erlaubt das Mikroskop bzw. das Autofokusverfahren eine Korrektur über den gesamten Erstreckungsbereich des Modulationsobjektes.

Es ist grundsätzlich von Vorteil, wenn das Vergleichsobjekt so ausgebildet ist, dass die Gesamtintensität des leuchtenden Vergleichsobjektes gleich der des Modulationsobjektes ist. Dies kann z. B. erreicht werden, indem die leuchtende Fläche des Vergleichsobjektes der des Modulationsobjektes entspricht. Verwendet man als Vergleichsobjekt die leuchtende Linie oder das leuchtende rechteckige Feld, ist bevorzugterweise die Breite des Vergleichsobjektes um das Tastverhältnis des Modulationsobjektes geringer als die des Modulationsobjektes. Eine weitere Möglichkeit, dafür zu sorgen, dass die Intensität des Bildes des Vergleichsobjektes möglichst der des Bildes des Modulationsobjektes entspricht, besteht darin, das Vergleichsobjekt als Gitterspalt auszugestalten, dessen Gitterkonstante unterhalb der Auflösungsgrenze der Autofokus-Abbildungsoptik liegt. In beiden Fällen erscheint das Vergleichsobjekt in seiner Intensität gemindert. Die Minderung ist exakt auf die Intensität des Modulationsobjektes eingestellt, wenn Tastverhältnis und Gitterspaltenbreite von Modulationsobjekt und Vergleichsobjekt im wesentlichen gleich sind oder die Breite des Vergleichsobjektes um das Tastverhältnis des Modulationsverhältnisses geringer ist.

Eine weitere Möglichkeit, das Vergleichsobjekt zu bilden, besteht darin, dass neben dem Modulationsobjekt eine dazu komplementäre Struktur, z. B. eine Replik des Modulationsobjektes mit um 180 Grad verschobener Phasenlage, vorgesehen ist. Das Vergleichsobjekt ist dann die Kombination von Modulationsobjekt und der komplementären Struktur gebildet.

Die Abbildung von Vergleichsobjekt und Modulationsobjekt kann vorzugsweise gleichzeitig erfolgen. Eine Vereinfachung bei der Autofokuskamera ist erreicht, wenn die Bilder sequentiell abgebildet und sequentiell ermittelt werden.

Es versteht sich, das die vorstehend genannten sowie auch die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend unter Bezugnahme auf die Zeichnung beispielhalber noch näher erläutert. Es zeigen:
- Fig. 1: ein Mikroskop mit einer Autofokuseinrichtung für Reflexionsmessungen, Fig. 2 ein Mikroskop mit einer Autofokuseinrichtung für Fluoreszenzmessungen,
- Fig. 3: ein Mikroskop ähnlich dem der Fig. 1 , adaptiert für streuende Proben,
- Fig. 4: ein Mikroskop ähnlich dem der Fig. 1 mit einem erhöhten Fangbereich,
- Fig. 5: ein inverses Mikroskop mit einer Autofokuseinrichtung mit Einspiegelung der Beleuchtung zwischen Objektiv und Filterwürfel und
- Fig. 6: ein inverses Mikroskop mit einer Autofokuseinrichtung mit Einspiegelung im Mikroskopbeleuchtungsstrahlengang.
- Fig. 7: ein Mikroskop ähnlich dem der Fig. 6, mit einer Autofokuseinrichtung, welche einer Kamera eine Zwischenabbildungsoptik vorgeordnet ist,
- Fig. 8: eine Draufsicht auf einen exemplarischen Lichtmodulator, und
- Fig. 9 bis 11: Kontrastsignale zur Erläuterung der Funktion der Autofokuseinrichtung.

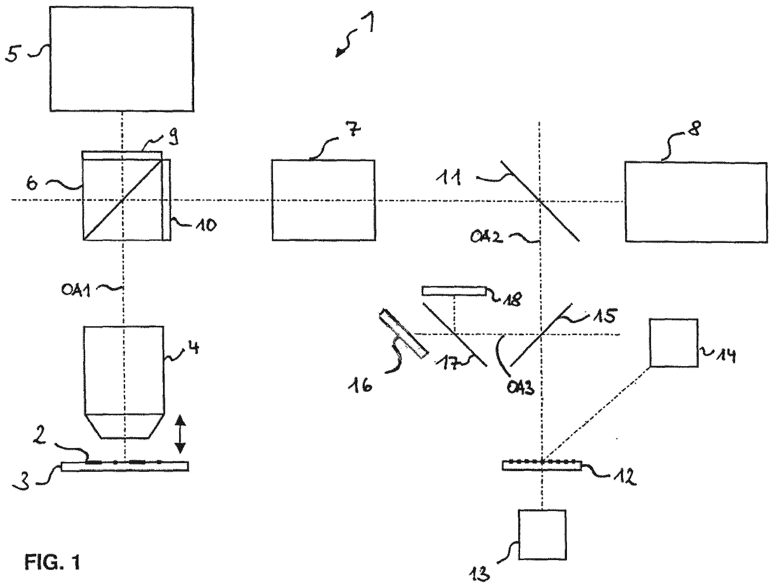

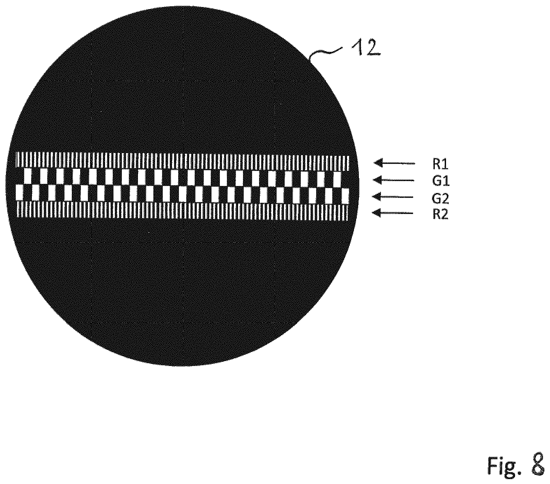

Fig. 1 zeigt ein Mikroskop 1, mit dem eine Probe 2, die sich auf einem Probenträger 3 befindet mittels eines Objektivs 4 auf einen Detektor 5 abgebildet wird. Das Mikroskop entspricht in seiner Grundstruktur dem aus WO 2007/144197 A1 bekannten Mikroskop. Dies gilt für die Bauweisen der Figuren 1-7. Die Offenbarung dieser Druckschrift wird deshalb hier vollumfänglich einbezogen. Der Unterscheid zu den Mikroskopen der WO 2007/144197 A1 liegt im Aufbau des Lichtmodulators 12, der nachfolgend anhand der Figur 8 noch näher erläutert werden wird.

Die Darstellung in Fig. 1 ist dabei stark vereinfacht. Bei dem Mikroskop 1 kann es sich um ein Weitfeldmikroskop handeln, d. h. der Detektor 5 ist z.B. eine Kamera oder ein Okulareinblick. Aber auch jede andere Mikroskopbauweise kommt für das Mikroskop 1 in Frage, beispielsweise ein Laser-Scanning-Mikroskop. Dann ist dem Mikroskopstrahlengang noch eine Scananordnung vorgesehen, die auf der optischen Achse OA1 liegt. Das Objektiv 4 ist in seiner Fokuslage verstellbar, wie der Doppelpfeil andeutet. Alternativ kann auch der Probenträger 3 verstellbar sein.

An einem Strahlteiler 6, der gegebenenfalls als Dichroit oder als plattenförmiger Farbteiler ausgebildet sein kann, ist Mikroskop-Beleuchtungsstrahlung aus einer Mikroskop-Beleuchtungsquelle 8 eingekoppelt, die über eine Beleuchtungs-Tubusoptik 7 die Probe 2 durch das Objektiv 4 beleuchtet. In diesen Beleuchtungsstrahlengang ist mittels eines Strahlteilers 11 eine Autofokuseinrichtung eingekoppelt. Die Autofokuseinrichtung verfügt über einen Lichtmodulator 12, der von einer Lichtquelle 13, beispielsweise eine LED, für Transmissionsbetrieb oder von einer Lichtquelle 14 (z.B. eine LED) für Reflexionsbetrieb beleuchtet ist. Der beleuchtete Lichtmodulator 12 generiert ein Modulationsobjekt. Dieses wird über den Strahlteiler 11, die Beleuchtungs-Tubusoptik 7, den Strahlteiler 6 sowie das Objektiv 4 in die Probe 2 projiziert, also abgebildet. Dadurch ist eine Autofokus-Beleuchtung realisiert. Das in der Probe 2 erzeugte Bild des Modulationsobjektes wird im gegenläufigen Weg mittels einer Kamera 16 erfasst, der ein weiterer Strahlteiler 15 auf der optischen Achse OA2 der Autofokuseinrichtung vorgelagert ist. Die dabei erhaltene optische Achse OA3 ist optional weiter noch über einen Strahlteiler 17 auf eine Kamera 18 geleitet.

Der Strahlteiler 11 ist in einer erfindungsgemäßen Bauweise dichroitisch ausgebildet und die Lichtquelle 13 bzw. 14 strahlt bei einer Wellenlänge, die von der Mikroskop-Beleuchtungsquelle 8 nicht wesentlich abgegeben oder für die Probenabbildung nicht benötigt wird. Die Autofokuseinrichtung arbeitet somit in einem Spektralbereich der für die Abbildung der Probe 2 ansonsten nicht verwendet ist.

Von den Kameras sind in den Figuren generell nur die Bildebenen gezeichnet. Die Kameras können generell CCD- oder CMOS-Kameras sein.

In der Bauweise der Fig. 1 liegt der Lichtmodulator 12 und damit das Modulationsobjekt senkrecht zur optischen Achse OA2. Die Kamera 16 steht mit ihrer Bildebene dagegen schräg zur optischen Achse OA3. Nimmt der Lichtmodulator 12 beispielsweise eine räumliche Modulation vor, z. B. ein Streifenmuster, findet sich der maximale Kontrast in einer senkrecht zur Zeichenebene liegenden Zeile der Kamera 16. Die Lage der Zeile längs der Kamera 16 ist ein Maß für die Lage der Fokusebene längs der optischen Achse, d. h. in z-Richtung.

Mit Hilfe der Beleuchtungstubusoptik 7 und des Objektivs 4 wird das Modulationsobjekt, das vom Lichtmodulator 12 entweder in Transmissionsbetrieb (Lichtquelle 13) oder im Reflexionsbetrieb (Lichtquelle 14) erzeugt wird, in die Probe abgebildet. Durch die schräggestellte Kamera 16 erfolgt eine Tiefenauflösung. Mittels der Kamera 18 kann zusätzlich eine laterale Verschiebung der strukturiert beleuchteten Probe detektiert werden.

Im Falle eines Fluoreszenzmikroskops werden ein Anregungsfilter 10 sowie ein Emissionsfilter 9 (für die Fluoreszenzstrahlung) verwendet. Das Mikroskop 1 kann ohne weitere Einschränkung hinsichtlich der Autofokuseinrichtung auch als scannendes Mikroskop, insbesondere als Laser-Scanning-Mikroskop, Nipkow-Scheiben-Mikroskop oder SPIM-Mikroskop ausgebildet sein.

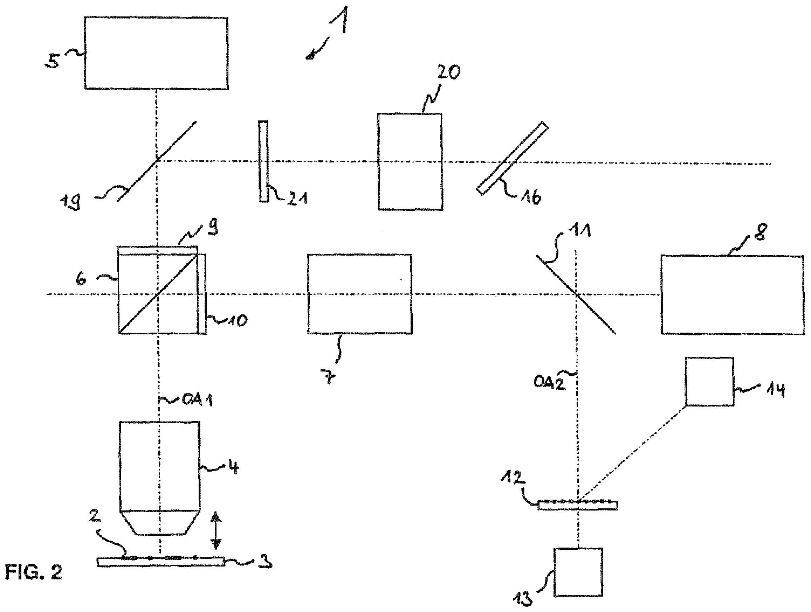

Fig. 2 zeigt eine alternative Gestaltung des Mikroskops der Fig. 1 hinsichtlich der Autofokuseinrichtung. Im Mikroskop der Fig. 2 sind Bauteile, die bereits anhand Fig. 1 erläutert wurden, mit denselben Bezugszeichen versehen; auf ihre wiederholte Beschreibung wird deshalb verzichtet. Die Kamera 16 detektiert hier den Fluoreszenzkontrast der Probe, welcher durch die strukturierte Autofokus-Beleuchtung noch verstärkt werden kann. Die Abbildung des Modulationsobjektes erfolgt ähnlich wie bei der Bauweise gemäß Fig. 1. Die Erfassung des in die Probe 2 abgebildeten Modulationsbildes geschieht jedoch nicht aus dem Beleuchtungsstrahlengang heraus, sondern über einen eigenständigen Strahlteiler aus dem Mikroskopstrahlengang. Dieser ist an die Wellenlänge der Autofokus-Beleuchtung angepasst und z. B. im gleichen Masse dichroitisch, wie der Strahlteiler 11. Um das in die Probe abgebildete Modulationsobjekt bzw. dadurch erzeugte Reflexe oder Rückstreuungen mittels der Kamera 16 erfassen zu können, ist dieser Kamera eine entsprechende Relaisoptik 20 vorgeordnet, deren optische Charakteristik dafür sorgt, dass die Bildebene der Kamera 16 eine konjugierte Ebene zum Modulationsobjekt schneidet, idealerweise nahe oder auf der optischen Achse (wie bei Fig. 1 auch).

Die von der Fokuseinrichtung, insbesondere der Kamera 16 gelieferten Signale werden zur Ansteuerung einer Fokusverstellung längs der z-Achse verwertet. Dies ist in Fig. 1 schematisch durch einen Doppelpfeil veranschaulicht. Das dabei eingesetzte Steuergerät ist in den Fig. 1 und 2 nicht gezeigt.

Ist das Mikroskop 1 in Fig. 2 als Laser-Scanning-Mikroskop ausgebildet, wird wiederum die Kombination aus Emissionsfilter 9 und Anregungsfilter 10 vorgesehen, wie auch optional ein weiterer Spektralfilter 21 , der dafür sorgt, dass auf die Kamera 16 der Spektralbereich des leuchtenden Modulationsobjektes fällt und nicht weiter interessierende Spektralbereiche ausgeblendet sind insbesondere die Spektralbereiche der Probenabbildung.

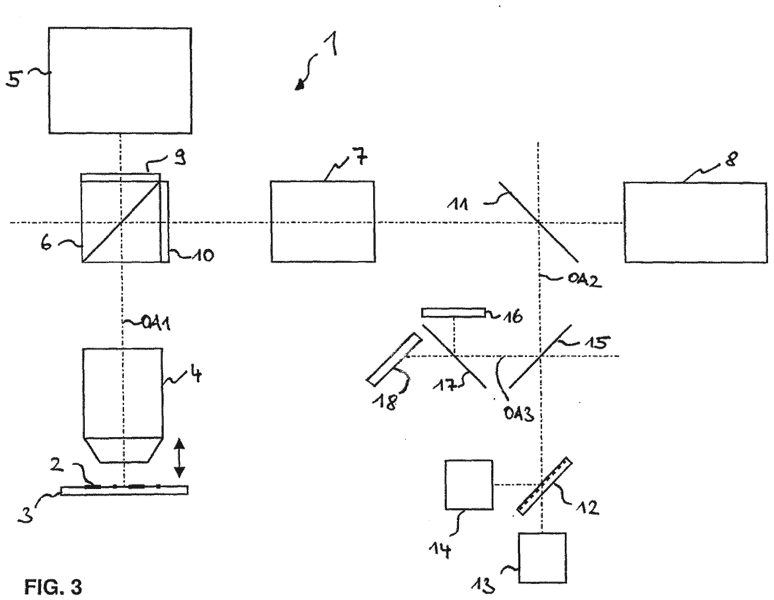

Fig. 3 zeigt eine Ausbildung des Mikroskops 1 für stark streuende und wenig reflektierende Proben. Elemente, die bereits anhand der Figuren 1 oder 2 erläutert wurden, werden nicht weiter beschrieben. Sie sind in der Figur mit den gleichen Bezugszeichen versehen.

Für stark lichtstreuende Oberflächen, wie z. B. Gewebeschnitte ist die Autofokuseinrichtung gemäß Fig. 3 abgewandelt. Es handelt sich um eine Einrichtung, die vorwiegend das von der Probe gestreute Licht analysiert.

Bei dieser Anordnung schließt der zweidimensionale Lichtmodulator 12 mit der optischen Achse OA2 einen Winkel zwischen 0 Grad und 90 Grad, bevorzugt zwischen 20 Grad und 70 Grad ein. Der Lichtmodulator 12 entspricht wieder der bereits geschilderten Bauweise, d. h. es kann sich um ein Transmissions-LCD, ein Reflexions-LCD, ein DMD oder ein Amplitudengitter mit Verschiebevorrichtung handeln. Die Struktur besteht vorzugsweise wiederum aus Hell-Dunkel-Streifen. Die Beleuchtung des Lichtmodulators 12 erfolgt vorzugsweise durch eine oder mehrere leistungsstarke LED. Auch dies war bei den Fig. 1 und 2 möglich. Bei einem Transmissionsmodulator ist dabei die Lichtquelle 13 vorgesehen, bei einem Reflexionsmodulator die Lichtquelle 14. Übliche optische Vorrichtungen zur Lichthomogenisierungen und Optiken zu Zwischenabbildungen können zur Erzeugung des Modulationsobjektes mit dem Lichtmodulator 12 verwendet werden und sind aus Gründen der Übersicht in der Fig. 3 (wie auch in den Fig. 1 und 2) nicht dargestellt.

Mit Hilfe der Beleuchtungstubusoptik 7 und des Objektivs 4 wird das Modulationsobjekt in die Probe 2 abgebildet. Da der Lichtmodulator 12 und damit das Modulationsobjekt nicht senkrecht zur optischen Achse steht, wird das Modulationsobjekt (z. B. alternierende Hell-Dunkel-Streifen) schräg zur optischen Achse und damit in die Tiefe der Probe abgebildet.

Die Bildebene der Kamera 18 liegt in einer zum Lichtmodulator 12 und damit zum Modulationsobjekt konjugierten Ebene. Sie ist also im gleichen Winkel zur optischen Achse (hier die optische Achse OA3) verkippt, wie der Lichtmodulator 12. Hierdurch wird von der Probe gestreutes Licht moduliert auf die Kamera 18 abgebildet. Der Kontrast des Modulationsobjektes erscheint auf Kamera 18 nur dort, wo er von der Probe gestreut wird. Daher ist die Ausführung in Fig. 2 besonders für dünne oder intransparente, streuende Proben geeignet, beispielsweise in der Materialmikroskopie. Gleichzeitig wird durch das verkippte Modulationsobjekt der Fangbereich vergrößert.

Zusätzlich weist die Autofokuseinrichtung für die Autofokusfunktion noch die Kamera 16 auf, deren Bildebene gegenüber dem Lichtmodulator 12 und damit dem Modulationsobjekt schräg steht, da sie senkrecht zur optischen Achse OA3 liegt. Sie ist über einen 50%-Splitter 17 innerhalb des Autofokusstrahlenganges eingespiegelt.

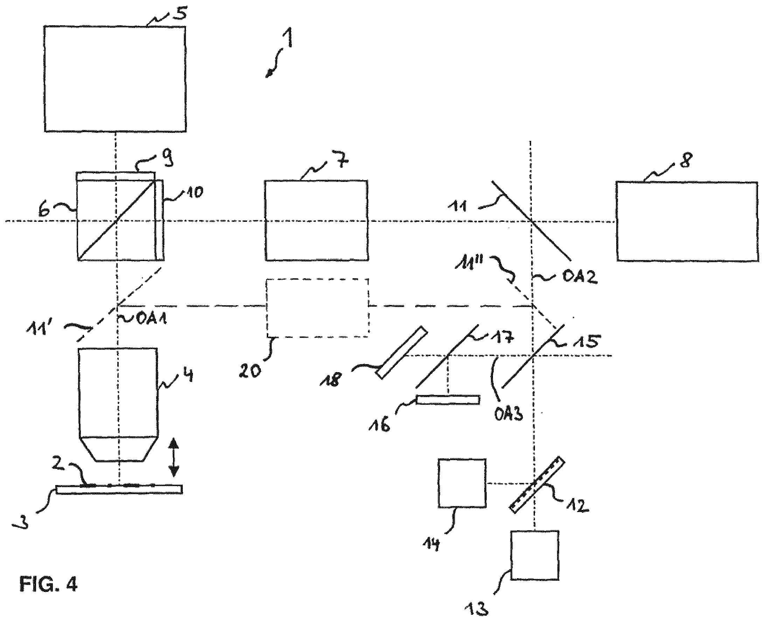

Fig. 4 zeigt eine weitere Abwandlung des Mikroskops hinsichtlich der Autofokuseinrichtung. Die Anordnung der Fig. 4 unterscheidet sich von der der Fig. 3 dadurch, dass der Autofokusstrahlengang möglichst nah an der Objektivpupille eingekoppelt wird.

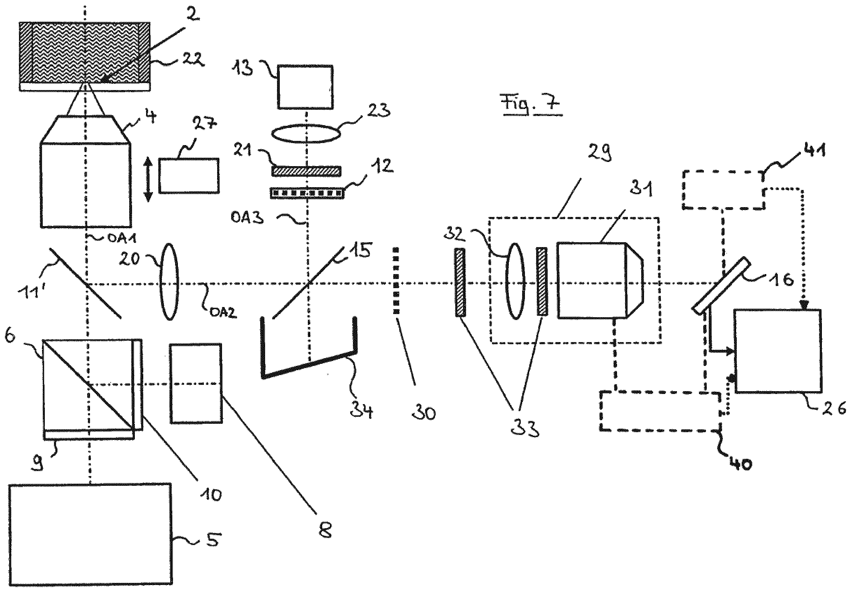

Diese Alternative ist prinzipiell für alle Bauweisen der Autofokuseinrichtung möglich und sieht einen eigenständigen dichroitischen Strahlteiler 11' im Mikroskopstrahlengang vor, der die Strahlung des Lichtmodulators 12 einkoppelt und die Darstellung des in die Probe abgebildeten Modulationsobjektes auf die Kamera 16 bzw. 18 leitet. In der Darstellung der Fig. 4 entfällt bei dieser Bauweise dann der Strahlteiler 11. Statt dessen ist optional ein Umlenkspiegel 11" vorgesehen. Auch erfolgt die Einkopplung über den Strahlteiler 11 mittels einer optionalen Optik 20, die eine gegebenenfalls nötige Zwischenabbildung erzeugt und sicherstellt, dass das Modulationsobjekt, d. h. der beleuchtete Lichtmodulator 12, in einer zur Fokusebene des Objektives 4 konjugierten Ebene liegt, mithin das Modulationsobjekt durch das Objektiv 4 in die Probe 2 abgebildet wird. Dieses Konzept wird später anhand Fig. 7 noch in einer Variante geschildert.

Die in Fig. 4 exemplarisch alternativ eingezeichnete Bauweise hat den Vorteil, dass die Autofokuseinrichtung sehr zuverlässig simultan zu allen gängigen Mikroskopiervorgängen arbeiten kann. Insbesondere ist es möglich, für das Modulationsobjekt, d. h. die Beleuchtung des Lichtmodulators 12, Strahlung zu verwenden, die mit ihrer Wellenlänge oberhalb der für die Mikroskopiervorgänge verwendeten Wellenlängen liegt. Bei Fluoreszenz- oder Durchlichtmessungen kann ein Wellenlängenbereich oberhalb von 700 nm, vorzugsweise oberhalb von 800 nm für die Autofokuseinrichtung verwendet werden. Ein zusätzlicher Spektralfilter vor der Kamera bzw. den Kameras kann potentiell störendes Licht der Mikroskopbeleuchtung effektiv unterdrücken.

Die Bauweisen der Fig. 1 bis 4 zeigen die Anordnung der Autofokuseinrichtung bei einem aufrechten Mikroskop 1 mit einem Objektträger als Probenhalter. Zwischen Objektträger und Objektiv kann sich ein Deckglas wie auch eine Immersionsflüssigkeit (z. B. öl, Wasser, Glycerin) befinden. Dies ist aber nicht zwingend erforderlich. Es gibt also zwei zu unterscheidende Anwendungsfälle: Ohne Immersionsflüssigkeit erhält man den höchsten Gitterkontrast von der Luft/Glas-Grenzfläche an der Deckglas- oder Objektträgeroberseite. Mit Immersionsflüssigkeit erhält man den höchsten Gitterkontrast von der Grenzfläche zwischen Deckglas-Unterseite und Einbettmedium. Zur Unterdrückung von Streulicht oder unerwünschten Reflexen können Blenden, z.B. halbkreisförmige Blenden, in den Autofokus-Strahlengang eingebracht werden.

Der Strahlteiler 11 oder 11' kann eine planparallele Glasplatte sein, die auf einer Seite entspiegelt ist, ohne störende Sekundärbilder zu vermeiden. Die der Reflexion des Autofokussignals dienende Seite der Glasplatte kann auch eine dichroitische Beschichtung aufweisen, die die Reflektivität für das langwellige Autofokuslicht erhöht (wenn die Variante mit langwelliger Autofokusbeleuchtung verwendet wird) und das kurzwelligere Nutzlicht der Mikroskopie (z. B. Fluoreszenzstrahlung) überwiegend transmittieren. Natürlich sind auch andere spektrale Aufteilungen möglich.

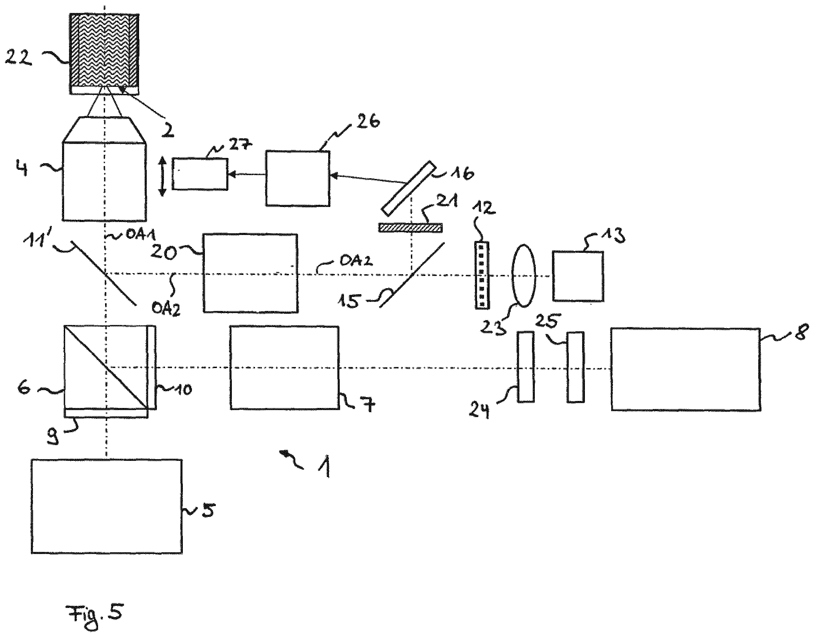

Fig. 5 zeigt ein inverses Mikroskop 1 mit einer erfindungsgemäßen Autofokuseinrichtung. Solche inversen Mikroskope werden vorwiegend zum Auslesen von Titerplatten verwendet, welche nach oben geöffnete Küvetten 22 mit Flüssigkeiten besitzen. Zu Fokussieren ist hier meist auf die Glas/Flüssigkeits-Grenzfläche des Titerplattenbodens (oder in dessen Nähe), wo meist Zellen haften. Da diese Zellen den Kontrast des projizierten Gitters, d. h. des Modulationsobjektes, beeinträchtigen, werden bei dieser Bauweise vorzugsweise mindestens 10 Zeilen der flächigen Kamera 16 ausgewertet. Dadurch kann das Kontrastsignal über eine größere Anzahl von Zeilen gemittelt werden, was die Messgenauigkeit wesentlich verbessert. Zwischen Objektiv 4 und Titerplattenboden kann sich wiederum Luft oder eine Immersionsflüssigkeit befinden, das oben bereits Gesagte gilt analog. Der einzige Unterschied besteht darin, dass anstelle des Einbettmediums eine ausgedehnte Flüssigkeitssäule vorliegt, die über der Probe in der Küvette 22 steht.

Die Autofokuseinrichtung ist in der Bauweise der Fig. 5 wiederum über einen eigenen dichroitischen Strahlteiler 11' in den Mikroskopstrahlengang und nicht in den

Beleuchtungsstrahlengang eingekoppelt. Ansonsten gilt das bereits Gesagte analog. Zusätzlich ist in Fig. 5 noch das optionale Spektralfilter 21 eingezeichnet. Auch ist die Ausleuchtungsoptik 23 zur Erzeugung des Modulationsobjektes aus dem Lichtmodulator 12 exemplarisch dargestellt. Zur homogenen Ausleuchtung des Lichtmodulators 12 enthält vorzugsweise die Ausleuchtungsoptik 23 auch eine Streuscheibe. Eine Ausleuchtungsoptik 23 kann in allen beschriebenen Varianten verwendet werden.

Weiter zeigt Fig. 5, dass die Signale der Kamera 16 an ein Steuergerät 26 geleitet werden, das entsprechende Berechnungen vornimmt und unter anderem den bereits erwähnten z-Antrieb 27 zur Verstellung der Fokuslage ansteuert. Natürlich ist das Steuergerät 26 in der Regel auch mit dem Lichtmodulator 12 verbunden, sofern dieser ansteuerbar ist. Gleiches gilt für die Lichtquelle 13. oder 14. Das Steuergerät 26 und die damit verbundenen Elemente sind auch bei den Bauweisen gemäß Fig. 1 bis 4 möglich.

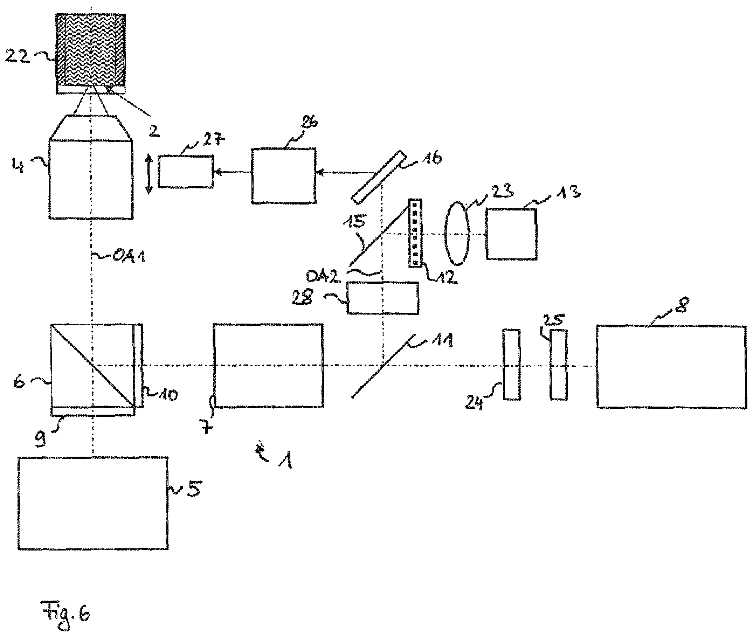

Fig. 6 zeigt eine Abwandlung der Bauweise der Fig. 5. Hier ist nun analog zur Bauweise der Fig. 1 die Autofokuseinrichtung über den Strahlteiler 11 in den Beleuchtungsstrahlengang eingespiegelt. Die separate Optik 20 kann entfallen, da dann keine Autofokusbeleuchtungstubusoptik nötig ist; deren Funktion wird von der Beleuchtungstubusoptik 7 erfüllt. Zusätzlich sind in Fig. 6 noch optionale Filter 24 und 25 im Beleuchtungsstrahlengang eingezeichnet. Auch ist der Einkopplung über den Strahlteiler 11 in Abbildungsrichtung des Modulationsobjektes eine Verkleinerungsoptik 28 vorgeordnet, die den Fangbereich der Autofokuseinrichtung beeinflusst und so dessen ideale Auslegung ermöglicht. Die Optiken 7, 20 und 28 können auch als (motorisierte) Variooptiken ausgelegt sein, um unterschiedliche Objektivvergrößerungen auszugleichen.

Fig. 7 zeigt eine weitere Bauweise eines Mikroskops mit einer Autofokuseinrichtung. Bauelemente, die in ihrer Funktion und/oder Struktur Elementen aus bereits beschriebenen Mikroskopen entsprechen, werden auch hier nicht noch einmal erläutert, um unnötige Wiederholungen zu vermeiden. In der Autofokuseinrichtung der Fig. 7 ist der Kamera 16 nun eine Abbildungsoptik 29 vorgeordnet, so dass nicht das Bild des Modulationsobjektes in der Probe direkt, sondern ein Zwischenbild 30 auf die Kamera 16 abgebildet wird. Natürlich kann dieses Prinzip, das in Fig. 7 am Beispiel eines inversen Mikroskops gezeigt wird, ganz grundsätzlich Anwendung finden. Der hier als Transmissionsgitter ausgebildete Lichtmodulator und das Zwischenbild 30 liegen in Ebenen, die zur Probenfokusebene sowie zu der Ebene, welche die Kamera 16 schneidet, konjugiert sind.

Die Abbildung des in der Probe liegenden Bildes des Modulationsobjektes unter Verwendung des Zwischenbildes 30 hat den erheblichen Vorteil, das der weitere Strahlteiler 15, der z. B. als 50:50-Strahlteiler abgebildet sein kann, in großer Entfernung zur Kamera 16 liegt.

Unvermeidbares Streulicht vom weiteren Strahlteiler 15 gelangt so nur noch über Mehrfachreflexionen, d. h. stark abgeschwächt zur Kamera 16. Zusätzlich werden durch die Zwischenbildeinkopplung auch alle von Optiken rechts des weiteren Strahlteilers 15 Reflexe zur Kamera 16 hin vermieden.

In einer exemplarischen Bauweise der Autofokuseinrichtung für das Mikroskop der Fig. 7 wird als Lichtquelle 13 eine IR-LED verwendet, deren Schwerpunktwellenlänge oberhalb 800 nm liegt, vorzugsweise bei 830 nm. Die Lichtquelle 13 ist mit dem Steuergerät 26 verbunden, so dass sie Bedarf ein- oder ausgeschaltet, zeitlich moduliert oder in ihrer Helligkeit regulierbar wird.

Der Lichtmodulator 12 ist als spaltenförmiges Transmissionsgitter ausgebildet. Um die Spalten möglichst homogen auszuleuchten und die Strahlung der Beleuchtungsquelle 13 somit möglichst effizient zu nutzen, ist eine Kollimatoroptik mit einer anamorphotischen Optik 23 vorgesehen, die eine linienförmige Beleuchtung bewirkt. Dem Lichtmodulator 12 vorgeordnet (alternativ auch nachgeordnet) ist das Filter 21 , das als IR-Bandpassfilter ausgebildet ist und an die Schwerpunktwellenlänge der IR-LED angepasst ist. Die Bandpassbreite liegt zwischen 10 und 50 nm, wodurch unerwünschte spektrale Anteile der Lichtquelle 13 unterdrückt werden.

Am weiteren Strahlteiler 15 ist eine Lichtfalle 34 vorgesehen, die Strahlung vom Lichtmodulator 12, welche transmittiert würde, absorbiert. Die Lichtfalle 34 ist vorzugsweise als schräg zur optischen Achse gestellte Platte eines stark absorbierenden Materials ausgebildet, z. B. als polierte NG1-Platte. NG1 ist ein stark absorbierendes, schwarzes Glas.

Der dichroitisch Strahlteiler 11' reflektiert nur Strahlung der Wellenlänge, wie sie nach dem Bandpassfilter 21 im Autofokusstrahlengang geführt ist. Andere Spektralanteile werden transmittiert. Dazu weist der Strahlteiler 11' eine Interferenzschicht auf, die Strahlung unterhalb 800 nm bei einem Einfallswinkel von 45 Grad weitgehend transmittiert und Strahlung mit der Schwerpunktwellenlänge der IR-LED weitgehend reflektiert. Auch kann der Strahlteiler 11' einen Keilwinkel aufweisen, um Interferenzen, die bei einem Laser-Scanning-Mikroskop, als das das Mikroskop der Fig. 7 ausgebildet sein kann, stören würden. Um auch mit lichtlinearer Fluoreszenzanregung arbeiten zu können, welche ebenfalls mit IR-Strahlung im Mikroskop zur Probenabbildung arbeitet, kann der Strahlteiler 11' auch ein bandpassartiges Spektralverhalten aufweisen, so dass Wellenlängen oberhalb des Autofokus-Spektralbereiches (z. B. oberhalb 840 nm) ebenfalls bei 45 Grad Einfallswinkel weitgehend transmittiert werden. Natürlich können diese Strahlteilermerkmale auch in anderen Ausführungsformen verwendet werden.

Weiter ist es vorzugsweise möglich, den Strahlteiler wechselbar zu gestalten, z. B. mittels eines Wechselrades oder eines anderen Wechselmechanismus.

Der Abbildung des in der Probe liegenden Bildes des Modulationsobjektes bzw. dessen Zwischenbild 30 sind Sperrfilter 33 vorgelagert, die dafür sorgen, dass nur Strahlung des entsprechenden Autofokus-Spektralbereiches zur Kamera 16 gelangt. Andere Strahlung die aus der Abbildung der Probe stammen kann, z. B. Anregungs- oder Fluoreszenzstrahlung in Falle eines Laser-Scanning-Mikroskops, wird dadurch nochmals unterdrückt. Die Abbildungsoptik 29 bildet das in der Probe liegende Bild des Modulationsobjektes bzw. das an einer Grenzfläche, z. B. der Glas/Flüssigkeits-Grenzfläche reflektierte Zwischenbild 30 auf die Kamera 16 ab. Die Abbildungsoptik 29 kann z. B. aus einer Tubuslinse 32 und einem Standardobjektiv 31 mit kleiner numerischer Apertur (z. B. NA=0,2) aufgebaut sein.

Fig. 8 zeigt in Draufsicht eine Bauweise des Lichtmodulators 12 zum Erzeugen des Modulationsobjektes, das hier als Gitterspalt G1 ausgebildet ist. Die Abbildung des Gitterspaltes G1 erzeugt Streifenkonturen in der Probe. Neben dem Gitterspalt G1 ist zusätzlich noch ein weiterer Gitterspalt R1 vorhanden, der als Vergleichsobjekt ausgebildet ist, mit dem die laterale Reflektivitätsverteilung der Probe direkt neben der Stelle, an der der Gitterspalt G1 in die Probe abgebildet wird, gemessen wird. Mit der gemessenen Reflektivitätsverteilung wird das Signal, d. h. die Intensitätsverteilung der Abbildung des Gitters G1 normiert, um den Einfluss von Reflektivitätsschwankungen der Probe 2 rechnerisch zu eliminieren.

Der Gitterspalt R1 weist eine Gitterfrequenz auf, die so hoch ist, dass sie von der Optik nicht mehr aufgelöst werden kann. Das Bild des Gitterspaltes R1 in der Probe 2 ist somit nicht strukturiert. Da das Tastverhältnis des Gitterspaltes R1 dem des Gitterspaltes G1 entspricht, ist die Lichtmenge, die durch den Gitterspalt R1 bei der Abbildung in die Probe gelangt, gleich der Lichtmenge, die bei der Abbildung des Gitterspaltes G1 auf die Probe gelangt. Dadurch kann besonders einfach mittels des Intensitätsverlaufes längs des Bildes des Gitterspaltes R1 der Intensitätsverlauf längs des Bildes des Gitterspaltes G1 korrigiert werden.

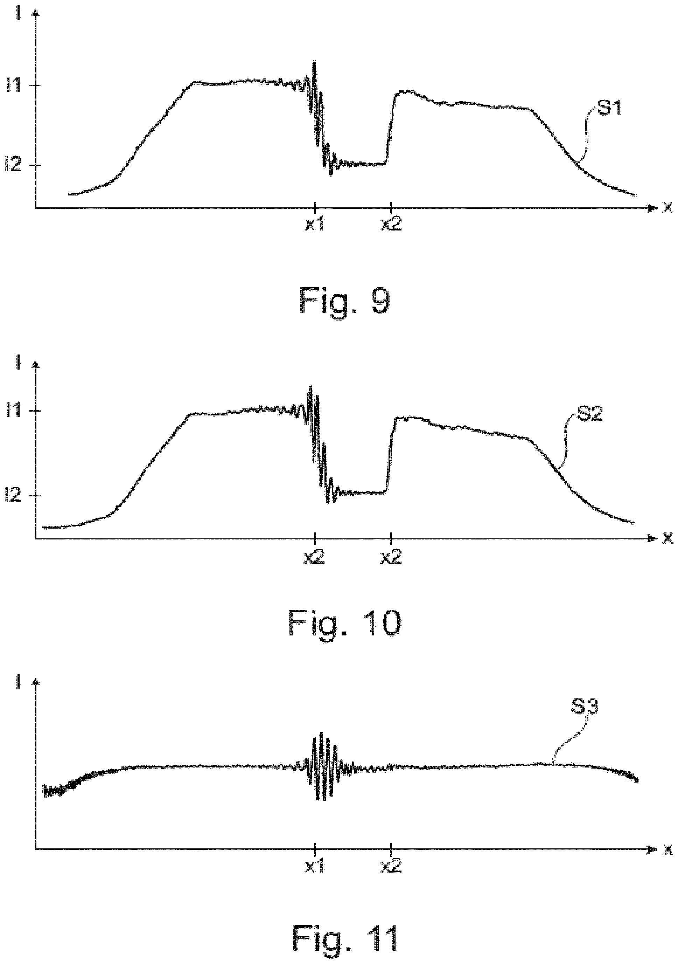

Das Ergebnis zeigt sich anhand der Fig. 9. Diese stellt den Intensitätsverlauf der reflektierten Strahlung des Bildes des Gitterspaltes G1 als Kurve S1 dar. Man sieht, dass die Intensität der reflektierten Strahlung von einem Plateau I1 auf einen Wert I2 fällt und danach wieder ansteigt. Dieser Verlauf ist durch eine geringere Reflektivität der Probe 2 zwischen den Orten x1 und x2 verursacht. Das Bild des als Vergleichsobjekt dienenden Gitterspaltes R1 gibt exakt diesen Verlauf wieder (nicht dargestellt), allerdings ohne die Modulation im Bereich des Ortes x1. Normiert man das Signal der Kurve S1 mit dem Intensitätsverlauf des Bildes des Gitterspaltes R1, erhält man das in Figur 11 dargestellte Signal gemäß Kurve S3. Die Modulation im Bereich des Ortes x1, die vom Modulationsobjekt in Form des Gitterspaltes G2 verursacht wird, ist nun gut zu erkennen und kann zur Erzeugung eines Autofokussignals verwendet werden.

Die Draufsicht auf den Lichtmodulator 12, der in Figur 8 dargestellt ist, zeigt noch einen weiteren Gitterspalt G2, der bis auf eine Phasenverschiebung von 180 Grad dem Gitterspalt G1 entspricht. Die Normierung kann in dieser Ausführungsform auch durch einen Bezug auf die kombinierte Intensität der Bilder der Gitterspalte G1 und G2 erfolgen. Dies zeigt Fig. 10, die an einer Kurve S2 das Signal zeigt, das bei der Auswertung des Intensitätsverlaufes längs des Gitterspaltes G2 erhalten wird. Addiert man diese beiden Signale so erhält man eine Größe, deren Einsatz als Normierung für das Signal, welches aus dem Bild des Gitterspaltes G1 oder dem Bild des Gitterspaltes G2 erhalten wurde, ebenfalls den Signalverlauf gemäß Kurve S3 in Fig. 11 liefert. Wesentlich hierfür ist, dass der Gitterspalt, welcher als Modulationsobjekt verwendet wird (beispielsweise der Gitterspalt G1) mit einer dazu komplementären Struktur kombiniert wird (beispielsweise Gitterspalt G2), so dass die Erfassung der Intensitätsverteilung des Bildes des Modulationsobjektes zusammen mit dem Bild der dazu komplementären Struktur insgesamt einem durchlaufenden Spalt entspricht. Die um 180 Grad Phasenverschiebung wiederholte Struktur des Modulationsobjektes zur Erzeugung eines Vergleichsobjektes ist nur exemplarisch zu verstehen. Grundsätzlich genügt es, wenn die Struktur, die zusammen mit dem Modulationsobjekt das Vergleichsobjekt bildet, komplementär zum Modulationsobjekt ist.

Der Lichtmodulator 12 der Figur 8 bietet damit folgende Optionen zur Eliminierung von Reflektivitätsvariationen der Probe 2 mittels Normierung:
1. G1/(G1+G2)
2. G2/(G1+G2)
3. G1/R1
4. G2/R1
5. G1/R2
6. G2/R2.

In dieser Auflistung sind die Bezugszeichen der entsprechenden Gitterspalte als Symbole für die mittels der Autofokuskamera gemessene Intensitätsverteilung der Bilder dieser Gitterspalte in der Probe 2 verwendet.

Natürlich können die Intensitätsverteilungen noch mit einem geeigneten Vorfaktor versehen werden; beispielsweise kann in den Fällen, in denen das Modulationsobjekt mit einer dazu komplementären Struktur kombiniert wird, ein entsprechender Vorfaktor bei der Normierung verwendet werden, der die unterschiedliche Lichtintensität zwischen Modulationsobjekt und Vergleichsstruktur berücksichtigt.

Die in Fig. 8 gezeigten Gitterspalten sind lediglich exemplarisch aufzufassen. Grundsätzlich genügt ein Modulationsobjekt mit einer weiteren Struktur, die entweder alleine oder in Kombination mit dem Modulationsobjekt die Vergleichsstruktur darstellt. Die Verwendung zusätzlicher Modulationsstrukturen oder Gitterspalten, wie in Figur 8, erhöhen jedoch die Genauigkeit und Robustheit des Verfahrens.

Auch muss der Lichtmodulator 12 nicht, wie in Figur 8 gezeigt, als statische Struktur ausgebildet werden. Er kann mittels eines entsprechend ansteuerbaren Elementes realisiert werden, das die Modulationsstruktur und die für die Vergleichsstruktur zusätzlichen Strukturen bereitstellt. Dies kann auch ganz grundsätzlich sequentiell erfolgen. Das hat den Vorteil, dass Vergleichsstruktur und Modulationsstruktur exakt an derselben Stelle in die Probe 2 abgebildet werden können, so dass der an und für sich geringe Versatz zwischen Vergleichsstruktur und Modulationsstruktur, der beispielsweise zwischen den Gitterspalten G1 und R1 der Figur 8 besteht, auch noch aufgehoben ist. Damit ist es völlig unmöglich, dass die Reflektivität der Probe zwischen den Bildern des Modulationsobjektes und des Vergleichsobjektes lokal schwankt.

Die den Modulations- bzw. Vergleichsobjekten zugeordneten Areale auf der Autofokuskamera können vorzugsweise aus mehreren Spalten und Zeilen bestehen, so dass man zur Rauschminimierung über mehrere Spalten oder Zeilen mitteln kann.

Der Fangbereich des Autofokussystems ist vorgegeben durch den Bereich der z-Verschiebung des Objektivs 4 (oder der Grenzfläche), in dem noch ein auswertbares Kontrastsignal auf der Autofokuskamera vorliegt. Zwei Bedingungen müssen hierzu erfüllt sein:
1. Das Kontrastsignal muss sich noch innerhalb des Bildfeldes befinden.
2. Das Kontrastsignal muss einen hinreichenden Signalpegel aufweisen, der signifikant über dem Rauschpegel liegt.

Der Haltebereich, in dem durch Nachregeln der Fokus gehalten werden kann, ist begrenzt durch den maximal zulässigen Bereich der z-Verschiebung der Fokusebene in die Probe hinein. Für den Fall, dass sich der Kontrastschwerpunkt in der Bildfeldmitte befindet, wenn die Fokusebene des Mikroskop-Objektivs 4 genau auf der Grenzfläche liegt, ist der Haltebereich genau halb so groß wie der Fangbereich.

Bei einer digitalen Signalauflösung von 8 Bit (256 Stufen) kann ein Kontrastpegel von 30 gerade noch sinnvoll ausgewertet werden. Aus diesem Grund muss die Bildfeldgröße auf der schräg gestellten Autofokuskamera so gewählt werden, dass am Rand des Fangbereichs die Kontrasthöhe gerade noch ausreicht. Die Größe der Kamera ist entsprechend angepasst.

Es ist deshalb optional eine Weiterbildung vorgesehen, die exemplarisch in Fig. 7 gestrichelt eingezeichnet ist. Dort ist ein Längs-Verstellmechanismus 40 vorgesehen, der den Abstand zwischen Autofokus-Objektiv 31 und Autofokus-Kamera 16 variiert. Dazu kann wahlweise das Objektiv 31 gegenüber der feststehenden Kamera 16 oder die Kamera 16 gegenüber dem feststehenden Objektiv 31 längs der optischen Achse bewegt werden. Für den vorzugsweise elektronisch angesteuerte Längs-Verstellmechanismus sind alle bekannten Antriebstechniken, wie Spindelantriebe, Schrittmotoren, Gleichstrommotoren, Piezosteller usw. geeignet. Die Variation des Abstandes zwischen Autofokus-Objektiv 31 und Kamera 16 ist nur ein Beispiel für das allgemein zugrundeliegende Prinzip, der Längsverstellung von Kamera 16 zur Bildebene der Autofokus-Abbildung. Im einfachsten Fall kann der Längs-Verstellmechanismus eine Verschiebung der Kamera 16, der Abbildungsoptik 29 oder des Lichtmodulators 12 bewirken.

Diese Weiterbildung behebt die beschriebene Limitierung des Fang- bzw. Haltebereichs.

Nun wird der Abstand zwischen Autofokus-Objektiv und Autofokuskamera an den gewünschten Haltebereich so angepasst, dass der Schwerpunkt des Kontrastsignals immer in der Bildfeldmitte liegt. Hierzu werden die in WO 2007/144197 A beschriebenen Schritte durchgeführt.

Prinzipiell ist die strukturierte Autofokus-Beleuchtung, z.B. mittels LCD oder DMD, auch bei einem Durchlichtmikroskop und/oder als Dunkelfeldbeleuchtung realisierbar. Im Durchlicht ist die Anwendung dann aber auf transparente Probenträger sowie auf streuende oder fluoreszierende Proben eingeschränkt.

Bei allen Varianten des Autofokus- und Tracking-Systems wird eine rechnerische Steuer- und Auswerteeinrichtung (z.B. ein Computer) verwendet, die die Signalanalyse und die Steuerung des Aktuatoren (z-Trieb, x-y-Tisch, Filter etc.) vornimmt. Auswertung und Steuerung können Firmware- und/oder Software-technisch implementiert werden. Diese Steuerung Auswerteeinrichtung übernimmt sämtliche hier geschilderte Ablaufsteuerung.

Statt verstellbarer, z. B. elektrisch schaltbarer Lichtmodulatoren (z. B. LCD, DMD) können auch statische Lichtmodulatoren (Transmissions- oder Phasengitter) verwendet werden. Das projizierte Modulationsobjekt kann mit verkippbaren Planplatten oder anderen Vorrichtungen probenseitig verschiebbar sein. Ein Austausch der Gitter kann zur Variation der Gitterkonstante oder -struktur ebenfalls möglich sein. Wie erläutert kann auch eine flächige Gitterstruktur verwendet werden, die mehrere unterschiedliche Gitterperioden aufweist, beispielsweise 2 bis 10 nebeneinander angeordnete Streifengitter mit unterschiedlichen Gitterfrequenzen. Je nach Ausbildung kann dabei für jede Struktur ein eigenes Vergleichsobjekt oder auch für mehrere oder alle Gitterstrukturen ein gemeinsames Vergleichsobjekt vorgesehen sein.

Da das Autofokusverfahren bevorzugt (aber nicht zwingend) mit flächigen (zweidimensionalen) Kameras arbeiten kann, kann dann bei mehreren Gitterzeilen für jeden Anwendungsfall das am besten geeignete Gitter durch Auslesen der entsprechenden Kamerazeilen gewählt werden, ohne mechanische Änderungen (z. B. Austausch des Gitters) vornehmen zu müssen.

Das geschilderte Prinzip des Lichtmodulators, der eine Modulationsstruktur und eine Vergleichsstruktur bereitstellt, kann nicht nur bei einem Mikroskop verwendet werden, wie es die WO 2007/144197 A1 beschreibt, sondern auch ein Mikroskop der Bauweise gemäß DE 10319182 A1 kommt in Frage. Die Offenbarung dieser Druckschrift wird deshalb diesbezüglich vollumfänglich einbezogen. Die Modulationsstruktur wie auch die für die Vergleichsstruktur erforderliche Struktur befindet sich dann an einem schräg verlaufenden Rand einer konfokalen Spaltblende. Die Abbildung des Modulationsobjektes sowie des Vergleichsobjektes erfolgt damit weitestgehend durch den Strahlengang, der auch zur Probenabbildung im Mikroskop bereitgestellt ist.

Soweit in dieser Beschreibung Verfahrensschritte bzw. besondere Betriebsweisen oder -modi geschildert sind, werden diese durch ein zur Autofokuseinrichtung gehörenden Steuereinrichtung z. B. wie im Steuergerät 26, realisiert. Natürlich kann auch eine im Mikroskop 1 ohnehin vorhandene Steuereinrichtung die entsprechenden Steueraufgaben mit übernehmen.

## Patentansprüche

1. Mikroskop mit einem Objektiv (4), das eine in einem Probenraum (2) liegende Fokusebene aufweist, und einer Autofokuseinrichtung, die aufweist
- einen Lichtmodulator (12), der zur Erzeugung eines leuchtenden, längs einer Richtung periodisch intensitätsmodulierten Modulationsobjektes (G1) ausgebildet ist,
- eine Autofokus-Beleuchtungsoptik (7; 20; 7, 28), die das Modulationsobjekt (G1) abbildet, so dass im Probenraum (2) ein Bild des Modulationsobjektes (G1) entsteht,
- eine Autofokus-Kamera (16, 18),
- eine Autofokus-Abbildungsoptik (7; 20; 7, 28; 20, 29), die das im Probenraum (2) liegende Bild des Modulationsobjektes (G1) auf die Autofokus-Kamera (16, 18) abbildet,
- eine Steuereinrichtung, die Signale der Autofokus-Kamera (16, 18) empfängt und dazu ausgebildet ist, eine Intensitätsverteilung des Bildes des Modulationsobjektes (G1) zu ermitteln und daraus ein Fokus-Steuersignal zu erzeugen,
- wobei der Lichtmodulator (12) zusätzlich ein leuchtendes Vergleichsobjekt (R1; G2) erzeugt, das sich längs der Richtung des Modulationsobjektes (G1) erstreckt,
- wobei die Autofokus-Beleuchtungsoptik (7; 20; 7, 28) auch das Vergleichsobjekt (R1; G2) abbildet, so dass im Probenraum (2) ein Bild des Vergleichsobjektes (R1; G2) entsteht, und
- wobei die Autofokus-Abbildungsoptik (7; 20; 7, 28; 20, 29) auch das im Probenraum (2) liegende Bild des Vergleichsobjektes (R1; G2) auf die Autofokus-Kamera (16, 18) abbildet,
**dadurch gekennzeichnet, dass**
- die Steuereinrichtung dazu ausgebildet ist, aus den Signalen der Autofokus-Kamera (16, 18) eine Intensitätsverteilung des Bildes des Vergleichsobjektes (R1; G2) längs der Richtung zu ermitteln und damit die Intensitätsverteilung des Bildes des Modulationsobjektes (G1) hinsichtlich Reflektivitätsvariationen im Probenraum (2) mittels Normierung zu korrigieren, und
- das Vergleichsobjekt die Form einer Linie oder eines rechteckigen Feldes hat oder die Form eines Gitterspaltes (R1) hat, dessen Gitterkonstante unterhalb der Auflösungsgrenze der Autofokus-Abbildungsoptik (7; 20; 7, 28; 20, 29) liegt.

2. Mikroskop nach Anspruch 1, **dadurch gekennzeichnet, dass** der Lichtmodulator (12) das Modulationsobjekt (G1) und das Vergleichsobjekt (R1; G2) gleichzeitig erzeugt und die Autofokus-Beleuchtungsoptik (7; 20; 7, 28) das Modulationsobjekt (G1) und das Vergleichsobjekt (R1; G2) gleichzeitig in den Probenraum (2) abbildet.

3. Mikroskop nach Anspruch 1, **dadurch gekennzeichnet, dass** das Modulationsobjekt die Form eines Gitterspaltes (G1) hat, wobei Tastverhältnis und Gitterspaltbreite von Gitterspalt des Modulationsobjektes (G1) und des Vergleichsobjektes (R1) im wesentlichen gleich sind.

4. Mikroskop nach Anspruch 1, **dadurch gekennzeichnet, dass** das Vergleichsobjekt von einer Kombination aus Modulationsobjekt (G1) mit einer dazu komplementären Struktur (G2) gebildet ist.

5. Mikroskop nach nach Anspruch 1, 3 oder 4, **dadurch gekennzeichnet, dass** die Steuereinrichtung dazu ausgebildet ist, die Bilder von Vergleichsobjekt (G1) und Modulationsobjekt (R1; G2) sequentiell abzubilden und die Intensitätsverteilungen sequentiell zu ermitteln.

6. Autofokusverfahren für ein Mikroskop mit einem Objektiv (4), das eine Probe abbildet, wobei
- ein leuchtendes, längs einer Richtung periodisch intensitätsmoduliertes Modulationsobjekt (G1) so auf die Probe (2) abgebildet wird, dass dort ein Bild des Modulationsobjektes (G1) entsteht,
- eine Intensitätsverteilung des Bildes des Modulationsobjektes (G1) ermittelt und daraus ein Fokus-Steuersignal erzeugt wird,
- wobei zusätzlich ein leuchtendes Vergleichsobjekt (R1; G2), das sich längs der Richtung des Modulationsobjektes (G1) erstreckt, auf die Probe (2) abgebildet wird, so dass dort ein Bild des Vergleichsobjektes (G1; G2) entsteht,
**dadurch gekennzeichnet, dass**
- eine Intensitätsverteilung des Bildes des Vergleichsobjektes (R1; G2) längs der Richtung ermittelt und damit die Intensitätsverteilung des Bildes des Modulationsobjektes (G1) hinsichtlich Reflektivitätsvariationen der Probe (2) mittels Normierung korrigiert wird und
- das Vergleichsobjekt die Form einer Linie oder eines rechteckigen Feldes hat oder die Form eines Gitterspaltes (R1) hat, dessen Gitterkonstante unterhalb der Auflösungsgrenze der Autofokus-Abbildungsoptik (7; 20; 7, 28; 20, 29) liegt.

7. Autofokusverfahren nach Anspruch 6, **dadurch gekennzeichnet, dass** das Modulationsobjekt (G1) und das Vergleichsobjekt (R1; G2) gleichzeitig erzeugt und in den Probenraum (2) abgebildet werden.

8. Autofokusverfahren nach Anspruch 6, **dadurch gekennzeichnet, dass** das Modulationsobjekt die Form eines Gitterspaltes (G1) hat, wobei Tastverhältnis und Gitterspaltbreite von Gitterspalt des Modulationsobjektes (G1) und des Vergleichsobjektes (R1) im wesentlichen gleich sind.

9. Autofokusverfahren nach Anspruch 6, **dadurch gekennzeichnet, dass** das Vergleichsobjekt von einer Kombination aus dem Modulationsobjekt (G1) mit einer dazu komplementären Struktur (G2) gebildet wird.

10. Autofokusverfahren nach Anspruch 6, 8 oder 9, **dadurch gekennzeichnet, dass** die Bilder von Vergleichsobjekt (R1) und Modulationsobjekt (G1) sequentiell abgebildet und die Intensitätsverteilungen sequentiell ermittelt werden.

## Claims

1. Microscope having an objective (4) comprising a focal plane situated in a sample space (2) and an autofocus device comprising
- a light modulator (12) configured for producing a light-emitting modulation object (G1) which is intensity-modulated periodically along a direction,
- an autofocus illumination optical unit (7; 20; 7, 28) imaging the modulation object (G1) such that an image of the modulation object (G1) is produced in the sample space (2),
- an autofocus camera (16, 18),
- an autofocus imaging optical unit (7; 20; 7, 28; 20, 29) imaging the image of the modulation object (G1) situated in the sample space (2) onto the autofocus camera (16, 18),
- a control device receiving signals of the autofocus camera (16, 18), said control device being configured to ascertain an intensity distribution of the image of the modulation object (G1) and to produce therefrom a focus control signal,
- wherein the light modulator (12) additionally produces a light-emitting comparison object (R1; G2) that extends along the direction of the modulation object (G1),
- wherein the autofocus illumination optical unit (7; 20; 7, 28) also images the comparison object (R1; G2) such that an image of the comparison object (R1; G2) is produced in the sample space (2), and
- wherein the autofocus imaging optical unit (7; 20; 7, 28; 20, 29) also images the image of the comparison object (R1; G2) situated in the sample space (2) onto the autofocus camera (16, 18),
**characterized in that**
- the control device is configured to ascertain an intensity distribution of the image of the comparison object (R1; G2) along the direction from the signals of the autofocus camera (16, 18) and to thus correct the intensity distribution of the image of the modulation object (G1) with respect to reflectivity variations in the sample space (2) by way of normalization, and
- the comparison object has the form of a line or of a rectangular field or has the form of a grating gap (R1), the grating constant of which is below the resolution limit of the autofocus imaging optical unit (7; 20; 7, 28; 20, 29).

2. Microscope according to Claim 1, **characterized in that** the light modulator (12) simultaneously produces the modulation object (G1) and the comparison object (R1; G2) and the autofocus illumination optical unit (7; 20; 7, 28) simultaneously images the modulation object (G1) and the comparison object (R1; G2) into the sample space (2).

3. Microscope according to Claim 1, **characterized in that** the modulation object has the form of a grating gap (G1), wherein the duty ratio and grating gap width of the grating gap of the modulation object (G1) and of the comparison object (R1) are substantially the same.

4. Microscope according to Claim 1, **characterized in that** the comparison object is formed from a combination of modulation object (G1) with a structure (G2) that is complementary thereto.

5. Microscope according to Claim 1, 3 or 4, **characterized in that** the control device is configured to sequentially image the images of comparison object (G1) and modulation object (R1; G2) and to sequentially ascertain the intensity distributions.

6. Autofocus method for a microscope having an objective (4) imaging a sample, wherein
- a light-emitting modulation object (G1), which is intensity-modulated periodically along a direction, is imaged onto the sample (2) such that an image of the modulation object (G1) is produced there,
- an intensity distribution of the image of the modulation object (G1) is ascertained and a focus control signal is produced therefrom,
- wherein additionally a light-emitting comparison object (R1; G2), extending along the direction of the modulation object (G1), is imaged onto the sample (2) such that an image of the comparison object (G1; G2) is produced there,
**characterized in that**
- an intensity distribution of the image of the comparison object (R1; G2) along the direction is ascertained and the intensity distribution of the image of the modulation object (G1) with respect to reflectivity variations of the sample (2) is corrected by way of normalization, and
- the comparison object has the form of a line or of a rectangular field or has the form of a grating gap (R1), the grating constant of which is below the resolution limit of the autofocus imaging optical unit (7; 20; 7, 28; 20, 29).

7. Autofocus method according to Claim 6, **characterized in that** the modulation object (G1) and the comparison object (R1; G2) are simultaneously produced and imaged into the sample space (2).

8. Autofocus method according to Claim 6, **characterized in that** the modulation object has the form of a grating gap (G1), wherein duty cycle and grating gap width of the grating gap of the modulation object (G1) and of the comparison object (R1) are substantially the same.

9. Autofocus method according to Claim 6, **characterized in that** the comparison object is formed from a combination of the modulation object (G1) with a structure (G2) that is complementary thereto.

10. Autofocus method according to Claim 6, 8 or 9, **characterized in that** the images of comparison object (R1) and modulation object (G1) are sequentially imaged and the intensity distributions are sequentially ascertained.

## Revendications

1. Microscope équipé d'un objectif (4) présentant un plan focal situé dans un espace à échantillon (2), et un dispositif de mise au point automatique comportant
- un modulateur de lumière (12) qui est conçu pour générer un objet de modulation lumineux (G1) périodiquement modulé en intensité le long d'une direction,
- une optique d'éclairage autofocus (7 ; 20 ; 7, 28) qui forme une image de l'objet de modulation (G1) afin qu'une image de l'objet de modulation (G1) apparaisse dans l'espace à échantillon (2),
- une caméra autofocus (16, 18),
- une optique d'imagerie autofocus (7 ; 20 ; 7, 28 ; 20, 29) qui forme l'image de l'objet de modulation (G1) se trouvant dans l'espace à échantillon (2) sur la caméra autofocus (16, 18),
- un dispositif de commande qui reçoit des signaux de la caméra autofocus (16, 18) et qui est conçu pour déterminer une distribution d'intensité de l'image de l'objet de modulation (G1) et pour générer à partir de celle-ci un signal de commande de mise au point,
- dans lequel le modulateur de lumière (12) génère en outre un objet de comparaison lumineux (R1 ; G2) qui se déplace le long de la direction de l'objet de modulation (G1),
- dans lequel l'optique d'éclairage autofocus (7 ; 20 ; 7, 28) forme également l'image de l'objet de comparaison (R1 ; G2), de façon qu'une image de l'objet de comparaison (R1 ; G2) apparaisse dans l'espace à échantillon (2), et
- dans lequel l'optique d'imagerie autofocus (7 ; 20 ; 7, 28 ; 20, 29) forme également l'image de l'objet de comparaison (R1 ; G2) située dans l'espace à échantillon (2) sur la caméra autofocus (16,18),
**caractérisé en ce que**
- le dispositif de commande est conçu pour déterminer à partir des signaux de la caméra autofocus (16, 18) une distribution d'intensité de l'image de l'objet de comparaison (R1 ; G2) le long de ladite direction et ainsi corriger au moyen d'une normalisation la distribution d'intensité de l'image de l'objet de modulation (G1) en ce qui concerne les variations de réflectivité dans l'espace à échantillon (2), et
- l'objet de comparaison présente la forme d'une ligne ou d'un champ rectangulaire ou présente la forme d'une fente de réseau (R1) dont la constante de réseau est inférieure à la limite de résolution de l'optique d'imagerie autofocus (7 ; 20 ; 7, 28; 20, 29).

2. Microscope selon la revendication 1, **caractérisé en ce que** le modulateur de lumière (12) génère simultanément l'objet de modulation (G1) et l'objet de comparaison (R1 ; G2) et **en ce que** l'optique d'éclairage autofocus (7 ; 20 ; 7, 28) forme simultanément l'image de l'objet de modulation (G1) et de l'objet de comparaison (R1 ; G2) dans l'espace à échantillon (2).

3. Microscope selon la revendication 1, **caractérisé en ce que** l'objet de modulation présente la forme d'une fente de réseau (G1), dans lequel le rapport cyclique et la largeur de la fente de réseau de l'objet de modulation (G1) et de l'objet de comparaison (R1) sont sensiblement identiques.

4. Microscope selon la revendication 1, **caractérisé en ce que** l'objet de comparaison est formé par une combinaison d'un objet de modulation (G1) avec une structure (G2) complémentaire de ce dernier.

5. Microscope selon la revendication 1, 3 ou 4, **caractérisé en ce que** le dispositif de commande est conçu pour former séquentiellement les images de l'objet de comparaison (G1) et de l'objet de modulation (R1 ; G2) et pour déterminer séquentiellement les distributions d'intensité.

6. Procédé de mise au point automatique pour un microscope comportant un objectif (4) qui forme une image d'un échantillon, dans lequel
- l'image d'un objet de modulation lumineux (G1) qui est périodiquement modulé en intensité le long d'une direction, est formée sur l'échantillon (2) de façon à ce qu'une image de l'objet de modulation (G1) y apparaisse
- une distribution d'intensité de l'image de l'objet de modulation (G1) est déterminée et un signal de commande de mise au point est généré à partir de celle-ci,
- dans lequel une image d'un objet de comparaison lumineux (R1 ; G2) qui s'étend le long de la direction de l'objet de modulation (G1) est en outre formée sur l'échantillon (2) de façon qu'une image de l'objet de comparaison (G1 ; G2) y apparaisse,
**caractérisé en ce que**
- une distribution d'intensité de l'image de l'objet de comparaison (R1 ; G2) est déterminée le long de ladite direction et **en ce que** la distribution d'intensité de l'image de l'objet de modulation (G1) soit ainsi corrigée par normalisation en ce qui concerne la réflectivité de l'échantillon (2) et **en ce que**
- l'objet de comparaison présente la forme d'une ligne ou d'un champ rectangulaire ou présente la forme d'une fente de réseau (R1) dont la constante de réseau est inférieure à la limite de résolution de l'optique d'imagerie autofocus (7 ; 20 ; 7, 28 ; 20, 29).

7. Procédé de mise au point automatique selon la revendication 6, **caractérisé en ce que** l'objet de modulation (G1) et l'objet de comparaison (R1 ; G2) sont simultanément générés et soumis à une formation d'image dans l'espace à échantillon (2).

8. Procédé de mise au point automatique selon la revendication 6, **caractérisé en ce que** l'objet de modulation présente la forme d'une fente de réseau (G1),
dans lequel le rapport cyclique et la largeur de la fente de réseau de l'objet de modulation (G1) et de l'objet de comparaison (R1) sont sensiblement identiques.

9. Procédé de mise au point automatique selon la revendication 6, **caractérisé en ce que** l'objet de comparaison est formé par une combinaison de l'objet de modulation (G1) et d'une structure (G2) complémentaire de celui-ci.

10. Procédé de mise au point automatique selon la revendication 6, 8 ou 9, **caractérisé en ce que** les images de l'objet de comparaison (R1) et de l'objet de modulation (G1) sont formées séquentiellement et **en ce que** les distributions d'intensité sont déterminées séquentiellement.
